# EUROPÄISCHE PATENTSCHRIFT

(11) **EP 1 764 394 B1**
(45) Veröffentlichungstag und Bekanntmachung des Hinweises auf die Patenterteilung: **05.11.2008**
(21) Anmeldenummer: 06018287.0
(22) Anmeldetag: 01.09.2006
(51) Int. Cl.: C08L 83/04, C09D 183/04, C09J 183/04, C08K 5/1515, C08K 3/34

(54) **Verwendung von Epoxy-funktionellen Silanen als Haftungsadditiv für kationisch strahlenhärtende Silicontrennbeschichtungen**
Use of silanes funcionalized with epoxy groups as adhesion promoter for silicon-based cationic radiation curable coatings
Utilisation de silanes à fonctionnalité epoxy comme promoteur d'adhésion pour revêtement à base de silicone, durcissable par voie cationique initiée par irradiation

(30) Priorität: 14.09.2005 DE 102005043742
(43) Veröffentlichungstag der Anmeldung: 21.03.2007
(73) Patentinhaber: Evonik Goldschmidt GmbH, 45127 Essen (DE)
(72) Erfinder: Herrwerth, Sascha, Dr., 45128 Essen (DE); Döhler, Hardi, 40221 Düsseldorf (DE); Ferenz, Michael, Dr., 45147 Essen (DE)

(56) Entgegenhaltungen:
- EP-A1- 0 718 432
- EP-A2- 0 599 615
- GB-A- 2 068 397
- GB-A- 2 123 842
- US-A- 3 691 206
- DATABASE WPI Week 199226 Derwent Publications Ltd., London, GB; AN 1992-214325 XP002408209 & JP 04 145119 A (TOSHIBA SILICONE KK) 19. Mai 1992 (1992-05-19)

## Beschreibung

Die vorliegende Erfindung betrifft die Verwendung von Epoxyfunktionellen Silanen als Haftungsadditiv für kationisch strahlenhärtende Silicontrennbeschichtungen auf Folien oder mit Kunststoff überzogenem Papier.

Abhäsive Beschichtungsmassen werden in großem Umfang zur Beschichtung insbesondere von flächigen Materialien verwendet, um die Adhäsionsneigung von adhärierenden Produkten gegenüber diesen Oberflächen zu verringern.

Abhäsive Beschichtungsmassen werden beispielsweise zur Beschichtung von Papieren oder Folien verwendet, welche als Träger für selbstklebende Etiketten dienen sollen.

Die mit einem Haftkleber versehenen Etiketten haften auf der beschichteten Oberfläche noch im genügenden Maße, um die Handhabung der die Klebeetiketten aufweisenden Trägerfolien zu ermöglichen.

Die Haftung der Klebeetiketten auf den Trägerfolien muss so hoch sein, dass bei der maschinellen Applikation von Etiketten, z.B. auf Gebinden, beim Lauf der der mit den Etiketten versehenen Trägerfolien über Umlenkwalzen kein vorzeitiges Ablösen erfolgt.

Die Etiketten müssen jedoch von der beschichteten Trägerfolie abziehbar sein, ohne dass ihre Klebkraft für die spätere Verwendung wesentlich beeinträchtigt wird.

Dazu ist eine besonders gute Aushärtung und Haftung der Silicontrennschicht erforderlich, da ansonsten Siliconbestandteile auf die Kleberoberfläche übergehen können und die Klebkraft reduzieren.

Weitere Verwendungsmöglichkeiten für abhäsive Beschichtungsmassen sind Verpackungspapiere, die insbesondere zur Verpackung von klebrigen Gütern dienen.

Derartige abhäsive Papiere oder Folien werden beispielsweise zum Verpacken von Lebensmitteln oder zum Verpacken technischer Produkte, wie z.B. Bitumen verwendet.

Eine weitere Anwendung von abhäsiven Beschichtungsmassen besteht in der Herstellung von Haftverschlüssen, wie z.B. bei sogenannten Höschenwindeln.

Ist die Abhäsivität zu hoch, d.h. der Trennwert zu niedrig, bleibt die Windel nicht zuverlässig geschlossen.
Ist die Abhäsivität zu niedrig und damit der Trennwert zu hoch, lässt sich der Verschluss nicht mehr ohne Zerreißen der Windel öffnen.

In allen Fällen ist die Stabilität der Abhäsivität über lange Zeiträume wichtig für die Funktion abhäsiver Beschichtungen.
Es darf weder zu einer nennenswerten Erhöhung noch Erniedrigung des Trennwertes kommen.

Seit den 80er Jahren sind zwei strahlenhärtende abhäsive Beschichtungsmassen im Markt bekannt.

Ein System härtet nach einem freien radikalischen Mechanismus nach Bestrahlung mit UV- oder Elektronenstrahlen aus.

Solche Systeme sind z.B. in US-4 201 808, US-4 568 566, US-4 678 846, US-5 494 979, US-5 510 190, US-5 804 301 und US-5 977 282 beschrieben und z.B. unter den Namen Tego RC 902, Tego RC 711 oder Tego RC 715 kommerziell erhältlich.

Das andere System härtet nach einem kationischen Härtungsmechanismus aus.

Diese bestehen aus reaktive Gruppen aufweisenden Organopolysiloxanen, die unter UV-Strahlung aushärten.

Diese reaktiven Gruppen können Epoxygruppen, Vinylethergruppen, Alkenyloxygruppen wie Vinyloxygruppen oder Propenyloxygruppen sein.

Solche Substanzen sind beispielsweise in US-A-5 057 549, US-A-5 231 157, US-A-4 421 904, US-A-4 547 431, US-A-4 952 657, US-A-5 217 805, US-A-5 279 860, US-A-5 340 898, US-A-5 360 833, US-A-5 650 453, US-A-5 866 261 und US-A-5 973 020 beschrieben. Typischerweise sind in solchen Systemen die polymerisierbaren Gruppen Epoxygruppen.

Kommerziell sind solche Produkte z.B. unter den Namen GE UV 9300, GE UV 9400 Tego, RC 1411, Tego 1402 oder Tego RC 1400 erhältlich.

Die kationische Photopolymerisation ist ein schneller, effizienter und umweltschonender Weg, um kationisch polymerisierbare Monomere zu härten.

Besonders effiziente Photoinitiatoren stellen Diaryliodonium (I) und Triarylsulfoniumsalze (II) dar.

Ar-I⁺-Ar X⁻ (I)

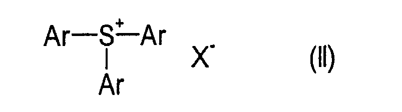

X⁻ = BF₄⁻, PF₆⁻, AsF₆⁻, SbF₆⁻

worin Ar für gleiche oder verschiedene aromatische Reste steht, die gegebenenfalls Heteroatome und/oder weitere substituierende Reste enthalten können.

Insbesondere Diaryliodoniumsalze (I) sind aus der Patentliteratur bekannt (GB-A-1 516 352, US-A-4 279 717, EP-A-0 334 056, US-A-5 468 890) und werden als Photoinitiatoren zur Polymerisation von kationisch polymerisierbaren Substanzen verwendet. Gegebenenfalls können ferner Co-Katalysatoren verwendet werden, um eine schnellere Aushärtung zu erzielen.

Die Epoxy-funktionalisierten Siloxane haben als Release Coating sehr gute Eigenschaften und die ausgehärteten Beschichtungen zeigen auf Substraten wie Papier eine gute Haftung. Auf Plastikfolien oder Kunststoff überzogenem Papier (Polyethylen, Polypropylen, Polystyrol und Polyester) haben sie hingegen eine ungenügende Haftung.

In der EP-1 116 761 werden verschiedene Haftungsadditive beschrieben. Als besonders geeignet werden die Verbindungen
Bis(trialkoxysilylalkyl)fumarate,
(Bis(trialkoxysilylalkyl)maleate,
Bis(trialkoxysilylalkyl)succinate und
Bis(trialkoxysilylalkyl)phthalate beschrieben.

Ferner wird in dieser Schrift das Vorurteil beschrieben, dass die beiden Epoxy-funktionellen Silane 3-Glycidyloxypropyltrimethoxysilan und 2-(3,4-Epoxycyclohexyl)ethyltrimethoxysilan als Haftungsadditiv für kationisch strahlenhärtende Silicontrennbeschichtungen auf Folie oder Kunststoff überzogenem Papier ungeeignet seien, da keine verbesserte Haftung erzielt würde.

Der vorliegenden Erfindung liegt daher die Aufgabe zugrunde, weitere, kommerziell erhältliche Haftungsadditive für kationisch strahlenhärtende Silicontrennbeschichtungen auf Folie oder Kunststoff überzogenem Papier bereitzustellen, die eine signifikante Verbesserung der Haftung auf kritischen Substraten ermöglichen (Polyethylen, Polypropylen, Polystyrol und Polyester) und zu keinen schlechteren Alterungseigenschaften führen.

Ein Gegenstand der Erfindung ist daher ein Verfahren zur Verbesserung der Haftung an strahlengehärteten abhäsiven Silicontrennbeschichtungen auf Folien oder Kunststoff überzogenem Papier durch Verwendung von Haftungsadditiven, welches dadurch gekennzeichnet ist, dass als Haftungsadditive mindestens ein Epoxy-funktionelles Silan der allgemeinen Formel (III) 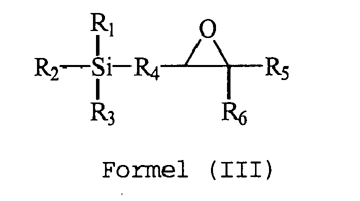 verwendet wird, in der
- R₁, R₂, R₃: gleiche oder verschiedene Alkyl-, Alkoxy-, Aryl-, Aryloxy- oder Alkenyl-Reste mit 1 bis 20 Kohlenstoffatomen, vorzugsweise Methoxy- oder Ethoxygruppen, wobei mindestens ein Rest eine Alkoxy oder Aryloxy-Gruppe darstellt,
- R₄: Alkenyl-Reste mit 1 bis 20 Kohlenstoffatomen, die Ether-, Ester-, Urethan- oder Amidgruppen enthalten können,
- R₅: H oder Alkylgruppen mit 1 bis 20 Kohlenstoffatomen,
- R₆: H, Alkylgruppen mit 1 bis 20 Kohlenstoffatomen oder Alkylengruppen, die mit R₄ einen cyclischen Ring bilden,
sind, und dass die kationisch härtenden Silicontrennbeschichtungen mindestens eine Siliconkomponente beinhalten, die neben Epoxygruppen auch partiell Hydroxygruppen aufweist.

Überraschenderweise wurde gefunden, dass entgegen des in der EP-1 116 761 beschriebenen Vorurteils durch die Verwendung von Epoxy-funktionellen Silanen eine deutliche Verbesserung der Haftung von kationisch härtenden Silkon-Trennbeschichtungen auf Folien oder Kunststoff überzogenem Papier erzielt werden kann.

Ein weiterer Gegenstand der Erfindung ist daher ein Verfahren zur Verbesserung der Haftung an strahlengehärteten abhäsiven Silicontrennbeschichtungen auf Folien oder Kunststoff überzogenem Papier durch Verwendung von Haftungsadditiven, welches dadurch gekennzeichnet ist, dass die kationisch strahlenhärtenden Silicontrennbeschichtungen mindestens eine Komponente der allgemeinen Formel (IV) enthalten, 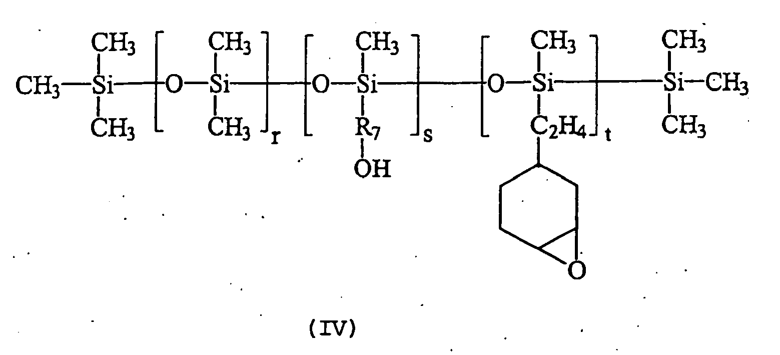 in der
- R₇: Alkenylgruppe mit 2 bis 20 Kohlenstoffatomen, die Ether-, Ester-, Urethan- oder Amidgruppen enthalten können, oder Polyetherreste der allgemeinen Formel (V)

-(CH₂)ₙ-[CH₂-CH(R₈)-O]ₘ-H (V)

R₈ gleiche oder verschiedene Reste aus der Gruppe: Alkylreste mit 1 - 20 C-Atomen, H, oder Arylreste mit 6 - 20 C-Atomen,
n 3 - 10,
m 1 - 100,
r 0 bis 1000, vorzugsweise 2 bis 200,
s 0,1 bis 100, vorzugsweise 0,1 bis 10,
t 1 bis 100, vorzugsweise 2 bis 40,
sind.

Solche Verbindungen sind z.B. unter dem Namen Tego RC 1402 kommerziell verfügbar.

Ferner ist es möglich bei der Verwendung von Epoxy-funktionellen Silanen der allgemeinen Formel (III) als Haftungsadditiv den kationisch strahlenhärtenden Epoxy-funktionalisierten Siloxanen Zusatzstoffe wie z.B. Füllstoffe, Co-Katalysatoren oder Pigmente zuzusetzen.

Die epoxyfunktionellen Silane der allgemeinen Formel (III) werden in einer Konzentration von 0,1 bis 10 Gewichtsprozent, bezogen auf die Gesamtzusammensetzung (Epoxy-funktionelles Siloxan, Photoinitiator und gegebenenfalls Füllstoff), eingesetzt. Besonders bevorzugt ist eine Verwendung in der Konzentration von 0,5 bis 5 Gewichtsprozent bezogen auf die Gesamtzusammensetzung.

Nachfolgende Beispiele sollen zur Verdeutlichung der Erfindung dienen, sie stellen keinerlei Einschränkung dar.

### Beispiele:

Als Haftungsadditiv wurden die Verbindungen
Vergleich 1: Bis(trialkoxysilylalkyl)fumarate,
Additiv 1: 3-Glycidyloxypropyltrimethoxysilan und
Additiv 2: 2-(3,4-Epoxycyclohexyl)ethyltrimethoxysilan
zu 0 Gew.-%, 2 Gew.-% und 5 Gew.-% in verschiedenen kationisch härtenden Siliconformulierungen eingesetzt. Die Siliconformulierungen enthalten ein Diaryliodoniumsalz (TEGO RC 1465 der Firma Goldschmidt) sowie kommerziell erhältliche Organopolysiloxane welche mit zur kationischen Polymerisation befähigten Epoxygruppen ausgerüstet wurde. Das Vergleichsprodukt GE UV 9300 enthält nach 1H-NMR Analyse neben Epoxygruppen keine Hydroxylgruppen. In dem kommerziell erhältlichem Produkt TEGO RC 1402 sind neben Epoxygruppen auch Hydroxylgruppen nachweisbar. Beide Produkte ergeben nach der Aushärtung eine sehr abhäsive Siliconschicht mit vergleichbaren Trenneigenschaften. Die getesteten Mischungen dieser Komponenten sind in Tabelle 1 zusammengefasst.

**Tabelle 1**

| Nr. | Silicon | Photoinitiator | Haftungsadditiv |
|---|---|---|---|
| 1* | GE UV 9300, 98% | TEGO RC 1465, 2% | kein |
| 2* | GE UV 9300, 96% | TEGO RC 1465, 2% | Vergleich 1, 2% |
| 3* | GE UV 9300, 93% | TEGO RC 1465 2% | Vergleich 1, 5% |
| 4 | TEGO RC 1402, 98% | TEGO RC 1465, 2% | kein |
| 5 | TEGO RC 1402, 96% | TEGO RC 1465, 2% | Vergleich 1, 2% |
| 6 | TEGO RC 1402, 93% | TEGO RC 1465 2% | Vergleich 1, 5% |
| 7* | GE UV 9300, 96% | TEGO RC 1465, 2% | Additiv 1, 2% |
| 8* | GE UV 9300, 93% | TEGO RC 1465, 2% | Additiv 1, 5% |
| 9 | TEGO RC 1402, 96% | TEGO RC 1465 2% | Additiv 1, 2% |
| 10 | TEGO RC 1402, 93% | TEGO RC 1465, 2% | Additiv 1, 5% |
| 11* | GE UV 9300, 96% | TEGO RC 1465, 2% | Additiv 2, 2% |
| 12* | GE UV 9300, 93% | TEGO RC 1465, 2% | Additiv 2, 5% |
| 13 | TEGO RC 1402, 96% | TEGO RC 1465 2% | Additiv 2, 2% |
| 14 | TEGO RC 1402, 93% | TEGO RC 1465, 2% | Additiv 2 5% |

| | | | |
|---|---|---|---|
| * Vergleichsformulierungen | | | |

Die Mischungen 1 bis 14 wurde dann mit einem Fünf-Rollen-Auftragswerk an einer Pilotanlage auf eine Polyesterfolie von Mitsubishi Type RC 36 aufgebracht. Das Auftragsgewicht lag bei 1,0 g/m². Die Beschichtung wurde anschließend mit einer Mikrowellen angeregten UV-Lampe (Fusion, 120 W/cm) bei einer Geschwindigkeit von 20 m/min gehärtet.
(A) Der Trennwert der Trennbeschichtungen wurde nach der FINAT Testmethode Nr. 10 bestimmt. Dazu wird das handelsübliche Klebeband (25 mm breit) TESA^{®} 7476 der Firma Beiersdorf eingesetzt. Zur Messung der Abhäsivität werden diese Klebebänder auf die Trennbeschichtung aufgewalzt und anschließend bei 40°C unter einem Gewicht von 70 g/cm² gelagert. Nach 24 h wird die Kraft gemessen, die benötigt wird, um das jeweilige Klebeband mit einer Geschwindigkeit von 30 cm/min unter einem Schälwinkel von 180° vom Untergrund abzuziehen. Diese Kraft wird als Trennkraft oder Trennwert bezeichnet.
(B) Die Bestimmung der Haftung des Silicons zum Untergrund wurde mittels eines einfachen, in der Industrie üblichen, subjektiven Tests ermittelt. Bei diesem so genannten Rub Off Test wird mit dem Zeigefinger in reproduzierbarer Art auf der Siliconbeschichtung gerieben. Hier wurde der Test durch 10fache kreisförmige Bewegung in einem Radius von etwa 2 cm mit moderatem Druck durchgeführt. Der Test wurde direkt nach der Aushärtung sowie nach 24 Stunden Lagerzeit bei Raumtemperatur durchgeführt. Er gilt als bestanden, wenn keine Siliconbestandteile vom Untergrund abgerieben werden können.

Die Ergebnisse sind in Tabelle 2 zusammengefasst.

**Tabelle 2**

| Nr. | Silicon | Haftungsadditiv | Trennwert TESA 7476 in cN/inch | Rub Off bestanden sofort | Rub Off bestanden 24 h |
|---|---|---|---|---|---|
| 1* | GE UV 9300, 98% | kein | 55 | Nein | Nein |
| 2* | GE UV 9300, 96% | Vergleich 1, 2% | 58 | Ja | Ja |
| 3* | GE UV 9300, 93% | Vergleich 1, 5% | 59 | Ja | Ja |
| 4 | TEGO RC 1402, 98% | kein | 52 | Nein | Nein |
| 5 | TEGO RC 1402, 96% | Vergleich 1, 2% | 55 | Ja | Ja |
| 6 | TEGO RC 1402, 93% | Vergleich 1, 5% | 56 | Ja | Ja |
| 7* | GE UV 9300, 96% | Additiv 1, 2% | 56 | Nein | Ja |
| 8* | GE UV 9300, 93% | Additiv 1, 5% | 58 | Nein | Ja |
| 9 | TEGO RC 1402, 96% | Additiv 1, 2% | 53 | Ja | Ja |
| 10 | TEGO RC 1402, 93% | Additiv 1, 5% | 58 | Ja | Ja |
| 11* | GE UV 9300, 96% | Additiv 2, 2% | 55 | Nein | Nein |
| 12* | GE UV 9300, 93% | Additiv 2, 5% | 59 | Nein | Ja |
| 13 | TEGO RC 1402, 96% | Additiv 2, 2% | 55 | Ja | Ja |
| 14 | TEGO RC 1402, 93% | Additiv 2, 5% | 58 | Ja | Ja |

| | | | | | |
|---|---|---|---|---|---|
| * Vergleichsformulierungen | | | | | |

Trennwerte um 50-60 cN/inch mit gleichzeitig guter Haftung deuten auf eine qualitativ gute Trennbeschichtung hin. Niedrige Trennwerte sowie eine schlechte Haftung deuten auf eine schlechte Aushärtung der Silicone hin. Dies ist bei keinem der Versuche der Fall. Erwartungsgemäße Trennwerte und schlechte Haftung deuten dagegen auf ein Verankerungsproblem der Siliconmischung zum Untergrund hin.

Aus den Beispielen 1 und 4 ist ersichtlich, das sowohl GE UV 9300 als auch TEGO RC 1402 auf Mitsubishi PET RN 36 unter den vorliegenden Beschichtungs- und Aushärtungsbedingungen keine ausreichende Haftung erreichen. Beispiel 2 und 3 sowie 5 und 6 zeigen, dass durch Zugabe des Vergleichsadditives gute Haftung erreicht wird.

Die Beispiele 7 und 8 sowie 11 und 12 zeigen für die Additive 1 und 2 dass eine gute Haftung in GE UV 930, welches ausschließlich Epoxygruppen enthält, möglich ist, jedoch nur nach Lagerzeit. Beispiele 9 und 10 sowie 13 und 14 zeigen das dagegen in TEGO RC 1465, welches zusätzlich zu Epoxygruppen noch Hydroxylgruppen enthält, eine gute Haftung bereits sofort nach der Beschichtung ermöglicht.

Damit ist gezeigt, dass die erfindungsgemäßen Additive 1 und 2 durchaus eine gute Haftung in kationisch härtenden Siliconen ermöglichen, insbesondere, wenn diese neben Epoxygruppen auch Hydroxylgruppen enthalten.

## Patentansprüche

1. Verfahren zur Verbesserung der Haftung an kationisch strahlengehärteten abhäsiven Silicontrennbeschichtungen auf Folien oder Kunststoff überzogenem Papier durch Verwendung von Haftadditiven, **dadurch gekennzeichnet, dass** als Haftadditive Epoxy-funktionelle Silane der allgemeinen Formel (III) 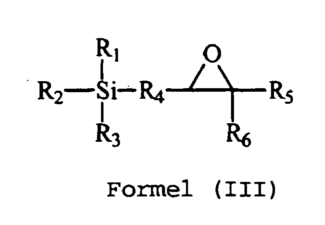 verwendet werden, in der
R₁, R₂, R₃ gleiche oder verschiedene Alkyl-, Alkoxy-, Aryl-, Aryloxy- oder Alkenyl-Reste mit 1 bis 20 Kohlenstoffatomen, vorzugsweise Methoxy- oder Ethoxygruppen, wobei mindestens ein Rest eine Alkoxy oder Aryloxy-Gruppe darstellt,
R₄ Alkenyl-Reste mit 1 bis 20 Kohlenstoffatomen, die Ether-, Ester-, Urethan- oder Amidgruppen enthalten können,
R₅ H oder Alkylgruppen mit 1 bis 20 Kohlenstoffatomen,
R₆ H, Alkylgruppen mit 1 bis 20 Kohlenstoffatomen oder Alkylengruppen, die mit R₄ einen cyclischen Ring bilden,
sind, und dass die kationisch härtenden Silicontrennbeschichtungen mindestens eine Siliconkomponente beinhalten, die neben Epoxygruppen auch partiell Hydroxygruppen aufweist.

2. Verfahren gemäß Anspruch 1, **dadurch gekennzeichnet, dass** als Haftadditiv mindestens eine Verbindung ausgesucht aus der Gruppe 3-Glycidyloxypropyltrimethoxysilan, 3-Glycidyloxypropyltriethoxysilan, 2-(3,4-Epoxycyclohexyl)-ethyltrimethoxysilan, 2-(3,4-Epoxycyclohexyl)ethyl-triethoxysilan verwendet wird.

3. Verfahren gemäß Anspruch 1 oder 2, **dadurch gekennzeichnet, dass** das Haftadditiv der allgemeinen Formel (III) in einer Konzentration von 0,1 bis 10 Gewichtsprozent, bezogen auf die Gesamtzusammensetzung, verwendet wird.

4. Verfahren gemäß mindestens einem der Ansprüche 1 bis 3, **dadurch gekennzeichnet, dass** die kationisch strahlenhärtenden Silicontrennbeschichtungen, mindestens eine Komponente der allgemeinen Formel (IV) enthalten, 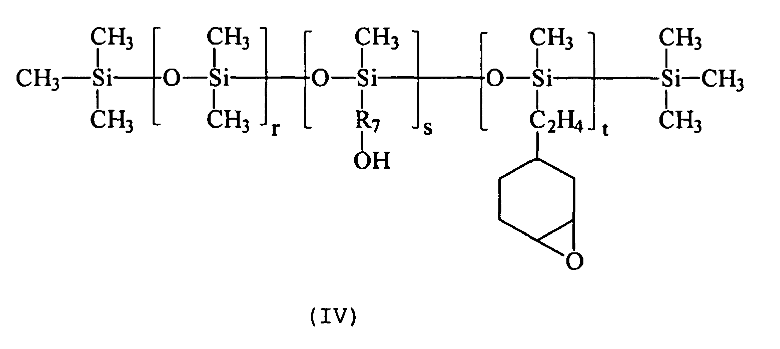 in der
R₇ Alkenylgruppe mit 2 bis 20 Kohlenstoffatomen, die Ether-, Ester-, Urethan- oder Amidgruppen enthalten können, oder Polyetherreste der allgemeinen Formel (V)
-(CH₂)ₙ-[CH₂-CH(R₈)-O]ₘ-H (V)
R₈ gleiche oder verschiedene Reste aus der Gruppe: Alkylreste mit 1 - 20 C-Atomen, H, oder Arylreste mit 6 - 20 C-Atomen,
n 3 - 10,
m 1 - 100,
r 0 bis 1000,
s 0,1 bis 100,
t 1 bis 100
sind.

## Claims

1. Method of improving the adhesion of cationically radiation-cured abhesive silicone release coatings on films or polymer-coated paper through use of adhesion additives, **characterized in that**, as adhesion additives, epoxy-functional silanes of the general formula (III) 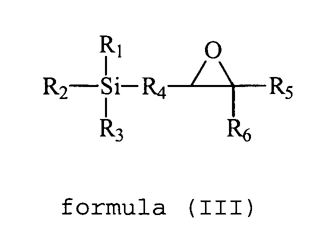 are used in which
R₁, R₂, and R₃ radicals are identical or different alkyl, alkoxy, aryl, aryloxy or alkenyl radicals having 1 to 20 carbon atoms, preferably methoxy or ethoxy groups, at least one radical being an alkoxy or aryloxy group,
R₄ radicals are alkenyl radicals having 1 to 20 carbon atoms, and may comprise ether, ester, urethane or amide groups,
R₅ radicals are H or alkyl groups having 1 to 20 carbon atoms, and
R₆ radicals are H, alkyl groups having 1 to 20 carbon atoms or alkylene groups which with R₄ form a cyclic ring, and **in that** the cationically curing silicone release coatings comprise at least one silicone component which in addition to epoxy groups also has, partially, hydroxyl groups.

2. Method according to Claim 1, **characterized in that** at least one compound selected from the group 3-glycidyloxypropyltrimethoxysilane, 3-glycidyloxypropyltriethoxysilane, 2-(3,4-epoxycyclohexyl)ethyltrimethoxysilane, and 2-(3,4-epoxycyclohexyl)ethyltriethoxysilane is used as adhesion additive.

3. Method according to Claim 1 or 2, **characterized in that** the adhesion additive of the general formula (III) is used in a concentration of 0.1 to 10 percent by weight, based on the total composition.

4. Method according to at least one of Claims 1 to 3, **characterized in that** the cationically radiation-curing silicone release coatings comprise at least one component of the general formula (IV) 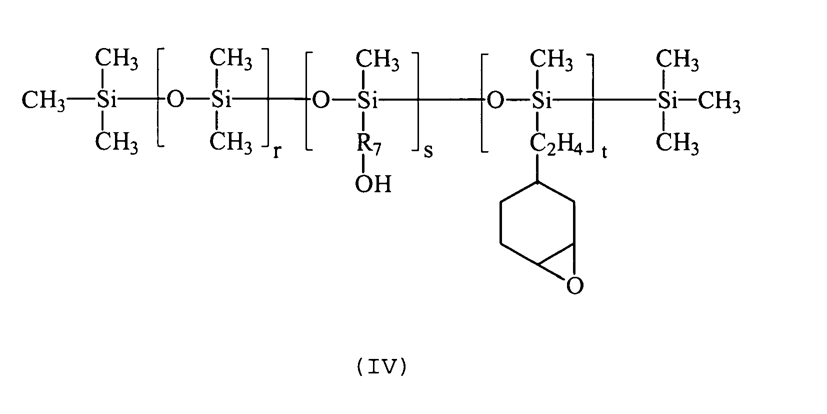 in which
R₇ radicals are alkenyl groups having 2 to 20 carbon atoms, and may comprise ether, ester, urethane or amide groups, or are polyether radicals of the general formula (V)
-(CH₂)ₙ-[CH₂-CH(R₈)-O]ₘ-H (V)
R₈ radicals are identical or different radicals from the following group:
alkyl radicals having 1-20 carbon atoms, H, or aryl radicals having 6-20 carbon atoms,
n is 3 - 10,
m is 1 - 100,
r is 0 to 1000,
s is 0.1 to 100, and
t is 1 to 100.

## Revendications

1. Procédé pour améliorer l'adhérence sur des revêtements de séparation siliconés antiadhésifs, durcis cationiquement par des rayons sur des feuilles ou du papier revêtu d'un matériau synthétique par utilisation d'additifs adhésifs, **caractérisé en ce qu'**on utilise comme additifs adhésifs des silanes à fonctionnalité époxy de formule générale (III) 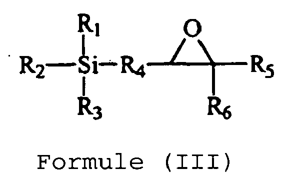 dans laquelle
R₁, R₂, R₃ représentent des radicaux alkyle, alcoxy, aryle, aryloxy ou alcényle identiques ou différents, comprenant 1 à 20 atomes de carbone, de préférence des groupes méthoxy ou éthoxy, au moins un radical représentant un groupe alcoxy ou aryloxy,
R₄ représente des radicaux alcényle comprenant 1 à 20 atomes de carbone, qui peuvent contenir des radicaux éther, ester, uréthane ou amide,
R₅ représente H ou des groupes alkyle comprenant 1 à 20 atomes de carbone,
R₆ représente H, des groupes alkyle comprenant 1 à 20 atomes de carbone ou des groupes alkylène, qui forment un cycle avec R₄,
et **en ce que** les revêtements de séparation siliconés durcissant cationiquement contiennent au moins un composant siliconé qui présente, outre des groupes époxy, partiellement également des groupes hydroxy.

2. Procédé selon la revendication 1, **caractérisé en ce qu'**on utilise comme additif adhésif au moins un composé choisi dans le groupe formé par le 3-glycidyloxypropyltriméthoxysilane, le 3-glycidyloxypropyltriéthoxysilane, le 2-(3,4-époxycyclohexyl)-éthyltriméthoxysilane, le 2-(3,4-époxycyclohexyl)éthyl-triéthoxysilane.

3. Procédé selon la revendication 1 ou 2,
**caractérisé**
**en ce qu'**on utilise l'additif adhésif de formule générale (III) en une concentration de 0,1 à 10% en poids, par rapport à la totalité de la composition.

4. Procédé selon l'une au moins quelconque des revendications 1 à 3, **caractérisé**
**en ce que** les revêtements de séparation siliconés durcissant cationiquement par des rayons contiennent au moins un composant de formule générale (IV), 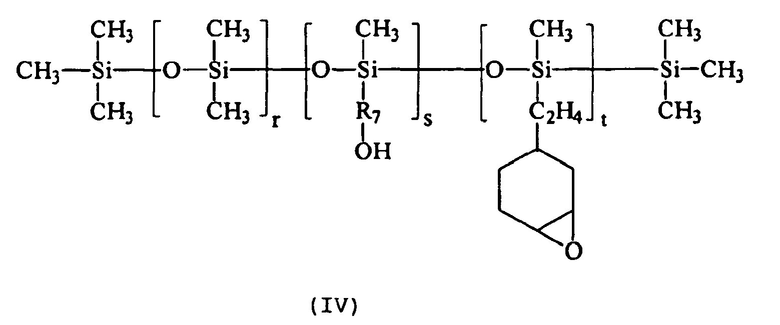 dans laquelle
R₇ représente des groupes alcényle comprenant 2 à 20 atomes de carbone, qui peuvent contenir des groupes éther, ester, uréthane ou amide, ou des radicaux polyéther de formule générale (V)
-(CH₂)ₙ-[CH₂-CH(R₈)-O]ₘ-H (V)
R₈ représente des radicaux identiques ou différents du groupe formé par : les radicaux alkyle comprenant 1 - 20 atomes de carbone, H, ou les radicaux aryle comprenant 6 - 20 atomes de carbone,
n vaut 3 - 10,
m vaut 1 - 100,
r vaut 0 à 1000,
s vaut 0,1 à 100,
t vaut 1 à 100.
